(19) Europäisches Patentamt
European Patent Office
Office européen des brevets

(11) **EP 2 108 105 B1**

(12) **EUROPÄISCHE PATENTSCHRIFT**

(45) Veröffentlichungstag und Bekanntmachung des Hinweises auf die Patenterteilung:
**20.05.2020 Patentblatt 2020/21**

(21) Anmeldenummer: **07847004.4**

(22) Anmeldetag: **06.12.2007**

(51) Int Cl.:
*G01D 5/244* (2006.01)    *G01D 5/347* (2006.01)

(86) Internationale Anmeldenummer:
**PCT/EP2007/010574**

(87) Internationale Veröffentlichungsnummer:
**WO 2008/083797 (17.07.2008 Gazette 2008/29)**

(54) **VERFAHREN ZUR BESTIMMUNG EINER EINFLUSSGRÖSSE AUF DIE EXZENTRIZITÄT IN EINEM WINKELMESSER**

METHOD FOR DETERMINING AN INFLUENCING VARIABLE ON THE ECCENTRICITY OF AN ANGLE MEASURING DEVICE

PROCÉDÉ DE DÉTERMINATION D'UNE GRANDEUR D'INFLUENCE SUR L'EXCENTRICITÉ DANS UN DISPOSITIF DE MESURE D'ANGLE

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **09.01.2007 EP 07100296**

(43) Veröffentlichungstag der Anmeldung:
**14.10.2009 Patentblatt 2009/42**

(73) Patentinhaber: **Leica Geosystems AG**
**9435 Heerbrugg (CH)**

(72) Erfinder:
• **LIPPUNER, Heinz**
**9445 Rebstein (CH)**
• **SIERCKS, Knut**
**9402 Mörschwil (CH)**
• **AEBISCHER, Beat**
**9435 Heerbrugg (CH)**

(74) Vertreter: **Kaminski Harmann**
**Patentanwälte AG**
**Landstrasse 124**
**9490 Vaduz (LI)**

(56) Entgegenhaltungen:
EP-A- 1 632 754    DE-A1- 19 907 326
US-A1- 2001 013 765

**Beschreibung**

Die Erfindung betrifft ein Verfahren zur Bestimmung wenigstens einer Einflussgrösse auf die gemessene Exzentrizität in einem Winkelmesser nach dem Oberbegriff des Anspruchs 1 und ein Computerprogrammprodukt.

Verfahren und Vorrichtungen zum genauen Bestimmen eines Drehwinkels werden seit vielen Jahren unter anderem als Drehwinkelgeber bei Messvorrichtungen, insbesondere in der geodätischen und industriellen Vermessung, eingesetzt. Über solche Verfahren und Vorrichtungen ist es bei entsprechenden Vorkehrungen sogar möglich, mit einer Messgenauigkeit in der Grössenordnung einiger weniger Winkelsekunden einen Vollkreis in über eine Million Einheiten aufzulösen.

Um derartig hohe Genauigkeiten erreichen zu können, muss einerseits der Detektor lagestabil zu einem Lager angeordnet sein, über welches der Drehkörper relativ zum Detektor um eine Achse drehbar gelagert ist. Andererseits ist eine hohe Mass- und Formhaltigkeit des Drehkörpers, insbesondere die Anordnung und Ausbildung auf dem Drehkörper in Drehrichtung hintereinander um ein Musterzentrum angeordneter Musterelemente, eine zwingende Voraussetzung. Neben partiellen Teilungsungenauigkeiten, die auf Abweichungen der vorgegebenen Abstände zwischen einzelnen hintereinander angeordneten Musterelementen und/oder auf Abweichungen der Abmessungen der Musterelemente selbst zurückzuführen sind, verunmöglicht in der Praxis oft eine Beabstandung des Musterzentrums von der Achse, eine so genannte Exzentrizität des Musterzentrums zur Achse, ein Erreichen geforderter Genauigkeiten. Aufgrund immer vorhandener Fertigungstoleranzen weist jeder Drehkörper eine Exzentrizität auf, die in der Regel konstanten Wert hat. Zudem treten neben der Exzentrizität des gesamten Musters, also der Gesamtheit aller Musterelemente relativ zum Drehkörper oder der Zentrierung der Teilung zur Welle, noch eigentliche Teilungsfehler des Kreises auf, d.h. eine Abweichung der einzelnen Musterelemente relativ zueinander und damit innerhalb der Anordnung der Musterelemente.

Der Drehkörper wird in einem Lager rotierbar geführt, wobei durch die mechanische Anordnung weitere Einflussgrössen auf die messbare Exzentrizität resultieren. Die hieraus entstehenden Rundlaufabweichungen des Lagers können damit ebenfalls einen Beitrag zur Exzentrizität liefern. Wirken beim Bestimmen von Drehwinkeln - insbesondere bei schweren Messobjekten - auf Teile der Vorrichtung nennenswerte Belastungen durch Kräfte, so können drehwinkelabhängige oder sich zeitlich ändernde Exzentrizitäten auftreten. Diese werden beispielsweise durch ein ohnehin vorhandenes Lagerspiel sowie Veränderung durch die Schmierung des Lagers und die Lagerbelastung bewirkt oder verstärkt. Zudem treten durch eine Neigung der Rotationsachse des Drehkörpers Taumelfehler auf.

Um solche mechanische Lagerfehler zu verringern oder gänzlich zu vermeiden, werden bisher vergleichsweise hochwertige, aufwendige Lager verwendet, welche es erlauben, die Exzentrizität innerhalb einer zulässigen Toleranz zu stabilisieren, so dass zumindest keine Veränderungen einer kalibrierbaren mechanischen Exzentrizität eintreten.

In vielen Winkelmessern werden die Musterelemente optisch auf eine Anordnung aus einem oder mehreren Detektorelementen, z.B. CCD- oder CMOS-Sensoren, abgebildet, wie beispielsweise in der CH 658514 geoffenbart. Aus der Lage der Musterelemente auf der Detektoranordnung bzw. deren Komponenten kann auf den Winkel des Drehkörpers gegenüber der Detektoranordnung geschlossen werden. Hierbei dient ein Detektorzentrum, z.B. bei einem einzigen Detektorelement dessen Mittelpunkt oder bei einer Mehrzahl von Detektorelementen der Flächenschwerpunkt der von diesen abgedeckten Fläche, als Bezugsgrösse, wobei im Idealfall ohne mechanische Exzentrizitätsfehler das Detektorzentrum, der Drehpunkt und das Zentrum der Musterelemente zusammenfallen sollen.

Neben den bereits dargestellten mechanischen Einflussgrössen auf die gemessene Exzentrizität entstehen jedoch auf Einflüsse durch die verwendeten elektronischen Komponenten. Diese resultieren z.B. aus Quantisierungsfehlern oder dem Rauschen einer Analogelektronik. Dabei sind sowohl mechanische als auch elektronische Einflussgrössen zumeist abhängig von zeitlichen Veränderungen oder aufgrund von Temperaturschwankungen.

Zur Messung der aktuellen Exzentrizität ist aus der EP 1 632 754 ein Verfahren bekannt, bei dem wenigstens ein Teil einer Vielzahl um ein Musterzentrum angeordneter Musterelemente, von denen eine Vielzahl in Drehrichtung hintereinander angeordnet sind, über optische Strahlen auf einer Vielzahl aneinander gereihter - beispielsweise tausende - Detektorelemente eines CCD-Line-Arrays wenigstens teilweise abgebildet wird.

Die Musterelemente sind auf einem Drehkörper angeordnet, der mit dem Detektor um die Achse drehbar verbunden ist. Über die Detektorelemente ein und desselben Detektors werden Positionen der abgebildeten Musterelemente aufgelöst. In einem ersten Schritt werden über aufgelöste Positionen wenigstens eines Musterelements Auswirkungen einer Exzentrizität des Musterzentrums zur Achse auf das Bestimmen eines Drehwinkels rechnerisch ermittelt. In einem zweiten Schritt wird unter Berücksichtigung der ermittelten Auswirkungen der Drehwinkel über die aufgelösten Positionen hintereinander angeordneter Musterelemente genau bestimmt. In einer Variante des dort geoffenbarten Verfahrens werden bei dem ersten Schritt über einen Zwischenschritt hintereinander angeordnete Musterelemente zu wenigstens zwei Gruppen zusammengefasst und über die aufgelösten Einzelpositionen der jeweils zusammengefassten Musterelemente wenigstens zwei Gruppenpositionen rechnerisch ermittelt. Über die wenigstens zwei ermittelten Gruppenpositionen werden dann Auswirkungen der Exzentrizität auf das Bestimmen des Drehwinkels rechnerisch ermittelt. Über die ermittelten Gruppenpositionen kann dies mit höherer Genauigkeit erfolgen.

Eine entsprechende Vorrichtung weist einen optischen Detektor, der eine Vielzahl aneinander gereihter Detektorelemente umfasst, und einen Drehkörper auf, der eine Vielzahl um ein Musterzentrum angeordneter Musterelemente umfasst, von denen eine Vielzahl in Drehrichtung hintereinander angeordnet ist. Der Drehkörper ist mit dem Detektor um eine Achse drehbar verbunden. Über optische Strahlen ist wenigstens ein Teil der Musterelemente wenigstens teilweise auf Detektorelementen abbildbar. Positionen der abgebildeten Musterelemente sind über die Detektorelemente ein und desselben Detektors auflösbar. Die Musterelemente und die Detektorelemente sind bei dieser Vorrichtung derart ausgebildet und angeordnet, dass über aufgelöste Positionen wenigstens eines der Musterelemente Auswirkungen einer Exzentrizität des Musterzentrums zur Achse auf das Bestimmen eines Drehwinkels selbsttätig rechnerisch ermittelbar sind und über aufgelöste Positionen hintereinander angeordneter Musterelemente unter Berücksichtigung der Auswirkungen der Exzentrizität der Drehwinkel genau bestimmbar ist.

Da über ein und denselben Detektor sowohl die Auswirkungen einer Exzentrizität auf das Bestimmen des Drehwinkels rechnerisch ermittelbar als auch der Drehwinkel um eine Achse genau bestimmbar ist, können Vorrichtungen zum genauen Bestimmen eines Drehwinkels mit hoher Auflösung realisiert werden. Da das Ermitteln der Auswirkungen einer Exzentrizität und das Bestimmen des Drehwinkels unter Berücksichtigung der Auswirkungen über ein und denselben Detektor mit ein und demselben ortsauflösenden Bereich erfolgt, kann zudem eine hohe Genauigkeit und Robustheit einer derartigen Vorrichtung erzielt werden. Auch ist es möglich, beide Funktionen mit denselben zu derselben Zeit aufgelösten Positionen von Musterelementen auszuführen.

Aus der US 2001/0013765 ist ein optischer Winkelmesser bekannt, bei dem eine Vielzahl von Sensoren an der Berandung eines scheibenförmigen Codeträgers angeordnet sind. Mit diesem System sollen ohne eine Messung von Exzentrizitäten oder deren Einflussgrössen die hieraus resultierenden Effekte durch Mittelung vermindert oder eliminiert werden.

Ein ähnlicher Ansatz wird in DE 199 07 326 verfolgt, wobei ein inkrementelles System geoffenbart wird, das durch Addition von Zählerständen definiert verteilter Sensoren eventuelle Exzentrizitäten eliminiert. Dies bedeutet, dass die hinsichtlich des zu bestimmenden Winkels auszuwertenden Signale keinen Exzentrizitätseinfluss mehr aufweisen sollen. Durch das System wird also ein Exzentrizitätsfehler kompensiert.

Die Verfahren des Stands der Technik bestimmen oder kompensieren somit nur die aktuelle Exzentrizität als Gesamtgrösse und differenzieren dabei nicht zwischen den verschiedenen Einflussgrössen und den damit verbundenen Charakteristiken, wie z.B. unterschiedlicher zeitlicher Variabilität.

Neben einer grundsätzlichen Verringerung oder Vermeidung einiger Einflussgrössen kann beispielsweise auch die translatorische Verschiebung der Drehachse gemessen und diese Verschiebung für das Endergebnis der Messung oder auch für direkte Korrekturen berücksichtigt werden. Dies kann beispielsweise durch Messung der Verschiebung des Lagerzapfens über bekannte, berührende oder berührungslose Messverfahren, z.B. Messtaster, direkt an der Welle erfolgen. Um diese Bewegung in der Ebene zu erfassen sind mindestens 3 oder mehr solcher Weggeber notwendig. Auch zylindrische, kapazitive, die Welle umfassende Sensoren sind dabei realisierbar. Dabei ist zu berücksichtigen, dass bei kleinem Unterschied zwischen translatorischer Lagerverschiebung und diesen versch. Fehlereinflüssen auch eine exakte Ermittlung der Lagerverschiebung schwierig ist. Durch solche den mechanischen Zustand des Systems direkt messenden Systeme werden Winkelmesser jedoch aufwendig, komplex und fehleranfällig.

Eine allgemeine Aufgabe der vorliegenden Erfindung besteht in der Verbesserung der Verfahren zur Winkelmessung, insbesondere der Exzentrizitätsbestimmung.

Eine spezifischere Aufgabe der vorliegenden Erfindung besteht darin, ein Verfahren zur Bestimmung der Einflussgrössen auf die Exzentrizität in einem Winkelmesser bereitzustellen, das ohne spezielle zusätzliche Komponenten zur Bestimmung einzelner mechanischer oder elektronischer Einflussgrössen auskommt.

Eine weitere Aufgabe der vorliegenden Erfindung besteht darin, bauliche Vereinfachungen der Lager von Drehkörpern in Winkelmessern zu ermöglichen bzw. die für diese Lager erforderlichen Anforderungen zu verringern.

Eine weitere Aufgabe der vorliegenden Erfindung besteht darin, die Einflussgrössen auf die aktuelle Exzentrizität algorithmisch bestimmbar zu machen, insbesondere auch hinsichtlich ihrer zeitlichen Veränderlichkeit.

Diese Aufgaben werden erfindungsgemäss durch die Merkmale des Anspruchs 1 oder durch Merkmale der abhängigen Ansprüche gelöst bzw. diese Lösungen weitergebildet.

Bei einem erfindungsgemässen Verfahren wird zum Bestimmen eines Exzentrizitätsfehlers für einen Drehwinkel um eine Achse wenigstens ein Teil einer Vielzahl um ein Musterzentrum angeordneter Musterelemente, von denen eine Vielzahl in Drehrichtung hintereinander angeordnet sind, über optische Strahlen auf ein oder mehrere Detektorelemente einer optischen Detektoranordnung wenigstens teilweise abgebildet, wie dies beispielsweise in der EP 1 632 754 offenbart ist. Die Musterelemente sind auf einem Drehkörper angeordnet, der mit dem Detektor um die Achse drehbar verbunden ist. Über die Detektorelemente werden Positionen der abgebildeten Musterelemente aufgelöst. In einem ersten Schritt wird für eine Vielzahl von Messungen die Exzentrizität des Musterzentrums zum Detektorzentrum rechnerisch ermittelt. In einem zweiten Schritt wird durch Aggregatbildung, d.h. durch Zusammenfassung und Verknüpfung, aus der Vielzahl von Messwerten wenigsten eine Einflussgrösse abgetrennt bzw. bestimmt. Je nach Ansatz werden die Einflussgrössen entweder bestimmt oder aber unterdrückt, z.B. durch herausmitteln. Bestimmte Einflussgrössen können dann entweder algorithmisch oder aber zur direkten Korrektur der Exzentrizität verwendet werden, z.B. zur mechanischen Korrektur der Achslage durch Stellelemente oder elektronisch durch Anpassung. Alternativ kann bei Erreichen eines Schwellwertes auch eine Fehlermeldung ausgegeben oder das Erfordernis einer Reparatur oder einer werksseitigen Korrektur angezeigt werden.

Die Erfindung basiert dabei auf der Nutzung der Detektorelemente der Detektoranordnung, d.h. der Winkelmessköpfe selber, für die Bestimmung der verschiedenen Einflussgrössen auf die Exzentrizität, wie z.B. der translatorischen Bewegung der Drehachse. Hierfür wird eine Vielzahl von Exzentrizitätsmessungen für verschiedene Winkellagen, d.h. Stellung von Drehkörper zu Detektoranordnung, durchgeführt. Die Aufnahme solcher Messungen kann dabei getrennt im Rahmen eines speziellen zweckgerichteten Durchlaufs von Kalibriermessungen erfolgen oder aber auf den fortlaufend gewonnenen Messungen im aktuellen Betrieb beruhen. Aus der Gesamtheit der Messungen können hierbei die verschiedenen Einflussgrössen separiert werden, insbesondere anhand ihrer spezifischen zeitlichen oder räumlichen Veränderlichkeit. Dies bedeutet, dass aus der Gesamtheit bzw. Mehrzahl der die Exzentrizität erzeugenden Einflussgrössen einzelne identifiziert und abgetrennt werden, wobei zumeist ein Residuum an Resteinflussgrössen verbleibt. Damit erfolgt eine Differenzierung der Einflussgrössen, deren Ursachen und Auswirkungen unterschiedlich sind bzw. zu durch unterschiedliche Massnahmen verringert oder kompensiert werden können. Je nach Umfang der zur Verfügung stehenden Messungen können dabei auch zeitliche Veränderungen der Einflussgrössen auf aktuelle Exzentrizitätsmessungen abgeleitet oder modelliert werden.

Ein Beispiel für solche Einflussgrössen ist die Bestimmung der aktuellen Lage der Drehachse des Drehkörpers innerhalb des Lagers. Hierbei erfolgt eine Bezugsetzung des Drehpunktes zu einem Detektorzentrum als einer ausgezeichneten Position der Detektoranordnung. Werden viele Exzentrizitätsmessungen für alle möglichen Winkellagen durchgeführt, idealerweise gleichverteilt, so weisen die Messungen einen Anteil auf der eine Periodizität von $2\pi$ besitzt und der als Muster- oder Codefehler durch die Abweichung des Musterzentrums vom Drehzentrum entsteht. Dieser Anteil kann beispielsweise durch eine Fourierzerlegung bestimmt werden. Alternativ kann bei hinreichend grosser Zahl von Messungen und gleichmässiger Verteilung der Winkellagen eine Abseparation dieses Einflusses aber auch durch die Bildung von Mittelwerten erfolgen. Um eine zeitliche Veränderlichkeit zu bestimmen kann dabei die Mittelwertbildung mit einem Fenster als gleitender Durchschnitt erfolgen. Je nach Breite des Fensters oder ggf. einer Gewichtung der Messungen entsteht eine entsprechende Auflösung.

Die Bestimmung der Einflüsse kann dabei auch parallel auf den gleichen Sätzen an Messwerten mit unterschiedlichen Verfahren oder Parametersätzen durchgeführt werden. Zur Anwendung können dabei unterschiedlichen Verfahren, z.B. zur Analyse von Zeitreihen, Signalanalyse oder allgemeine statistische Verfahren. Dabei werden die Verfahren und deren Parameter im allgemeinen von den zu bestimmenden Einflussgrössen und deren charakteristischen Grössen abhängen. Beispielsweise können die ersten Messungen nach dem Start des Gerätes analysiert werden, um die erwärmungsbedingten Einflüsse des Lagers oder der Elektronik zu ermitteln. Je nach Lagertyp sind die typischen Zeitskalen für die Verschiebungen der Achse bekannt oder abschätzbar, so dass zu analysierende Datenmengen oder die zu verwendenden Fenster bzw. Gewichtsfunktionen entsprechend bestimmt werden können.

Neben den Einflussgrössen, die zu einem direkten Exzentrizitätsbeitrag in der Ebene der Detektoranordnung führen, wie z.B. der translatorischen Verschiebung der Lagerwelle, kann mit geeigneten Winkelmessköpfen auch die Bewegung in der Achsrichtung als Z-Richtung ermittelt werden. Bei einigen Winkelmesssystemen, wie z.B. in CH 658514, wird ein Strichcode als Muster auf einen Zeilenarray oder Flächenarray projiziert. Durch die Abstandsänderung des Codes zum Empfänger ändert sich der Projektionsmassstab des Strichcodes. Diese Änderung des Projektionsmassstabes kann als Mass für die Abstandsänderung bzw. die Position in axialer Richtung verwendet werden. Werden für zwei Detektorelemente die Abstände zum Drehkörper bestimmt, so kann auch die Verkippung der Achse bestimmt werden. Etwaige Einflüsse aufgrund einer Deformation des Drehkörpers können dabei ausgeschlossen oder abgetrennt werden, wenn wiederum eine Identifikation oder Herausmittelung des Anteils mit einer Periodizität von $2\pi$ für die Winkellagen erfolgt.

Insgesamt erlaubt das erfindungsgemässe Verfahren durch die Bildung von zielgerichteten Aggregaten aus der Vielzahl von Messungen eine Identifikation und Berücksichtigung der verschiedenen Einflussgrössen auf die Exzentrizität. Je nach Wahl der Aggregatbildung wird dabei eine Einflussgrösse bestimmt oder unterdrückt, während die Wirkungen der übrigen Einflussgrössen ein Residuum bilden.

Ein erfindungsgemässes Verfahren wird nachfolgend anhand von in der Zeichnung schematisch dargestellten Ausführungsbeispielen rein beispielhaft näher beschrieben. Im einzelnen zeigen

Fig.1    die schematische Darstellung des strukturellen Aufbaus eines gattungsgemässen Winkelmessers;

Fig.2    die schematische Darstellung der Lage des Drehkörpers ohne Exzentrizitätsfehler;

Fig.3    die schematische Darstellung der Auswirkung der Einflussgrösse eines Codefehlers;

Fig.4    die schematische Darstellung der Auswirkung.der Einflussgrössen eines Codefehlers und einer translatorischen Verschiebung der Drehachse;

Fig.5    die schematische Darstellung der Separation der Einflussgrössen eines Codefehlers und einer translatorischen Verschiebung der Drehachse und

Fig.6    die schematische Darstellung der geometrischen Beziehungen für Bestimmung der axialen Position des Drehkörpers.

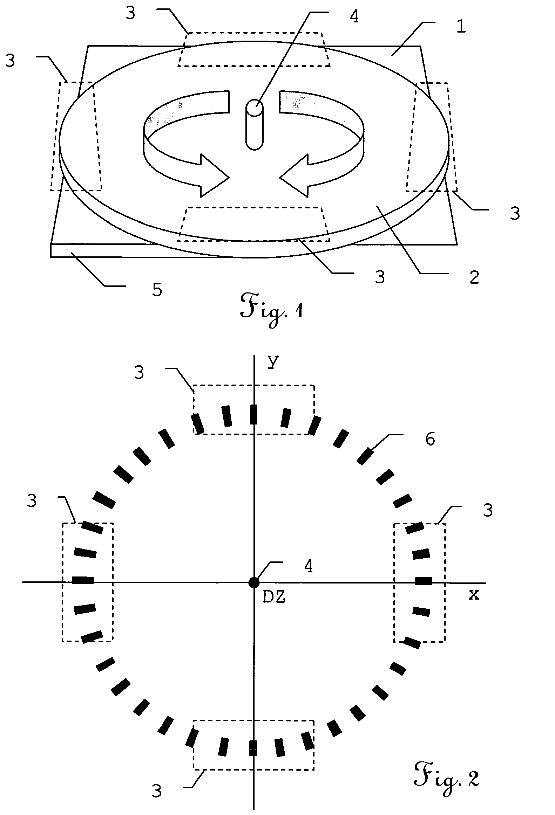

Fig.1 zeigt die schematische Darstellung des strukturellen Aufbaus eines gattungsgemässen Winkelmessers mit einem Trägerelement 1 mit einem Drehkörper 2 mit einer Vielzahl um ein Musterzentrum angeordneter Musterelemente, einer Detektoranordnung aus vier optischen Detektorelementen 3. Der scheibenförmige Drehkörper 2 ist gegenüber dem Trägerelement 1 um eine Achse 4 rotierbar angeordnet.

Zur Bestimmung einer aktuellen Drehlage des Drehkörpers 2 relativ zum Trägerelement 1 bzw. zur Detektoranordnung wird wenigstens ein Teil der Musterelemente auf die Detektorelemente 3 der Detektoranordnung abgebildet. Hierbei werden die Positionen der auf der Detektoranordnung abgebildeten Musterelemente aufgelöst und Drehlage sowie Exzentrizität des Musterzentrums relativ zu einem Detektorzentrum der Detektoranordnung abgeleitet. Je nach Ausgestaltung der Detektoranordnung und Zahl der Detektorelemente 2 kann die Exzentrizität in mehreren Schritten oder direkt im Zuge der Drehwinkelbestimmung abgeleitet werden. Um eine parallele Bestimmung von Drehwinkel und Exzentrizität mit hoher Auflösung zu ermöglichen, werden drei, vier oder auch mehr Detektorelemente 2 verwendet. Die gemessene Exzentrizität wird im Rahmen der einzelnen Messung noch nicht bezüglich ihrer unterschiedlichen Einflussgrössen separiert.

Erfindungsgemäss wird eine Vielzahl von Exzentrizitätsmessungen für unterschiedliche Drehlagen des Drehkörpers 2 durchgeführt. Dies kann als separater Mess- oder Kalibrierdurchgang erfolgen und/oder es können die Messergebnisse während des Betriebs aufgenommen und genutzt werden. Aus der Vielzahl von Exzentrizitätsmessungen werden durch eine Rechen- und Auswerteeinheit 5 verschiedene Einflussgrössen der aktuellen Exzentrizität separiert, insbesondere durch Aggregatbildung. Die Einflussgrössen können gespeichert bzw. zur Modellbildung verwendet werden und in aktuellen oder nachfolgenden Messungen sowie für mechanische oder elektronische Korrekturen verwendet werden.

Die dem Verfahren zugrundeliegende Beziehungen werden in Fig.2-4 erläutert, wobei in Fig.2 die schematische. Darstellung der Lage des Drehkörpers ohne Exzentrizitätsfehler erfolgt. Dargestellt werden die Musterelemente 6, deren Musterzentrum in diesem Fall mit der Drehachse 4 zusammenfällt. Für die Detektoranordnung aus den vier Detektorelementen 3 kann ein Detektorzentrum DZ definiert werden, das im Idealfall mit dem Musterzentrum und der Drehachse 4 übereinstimmen soll, so dass keine Exzentrizitätsfehler auftreten. Bezüglich der Detektoranordnung können zudem eine x- und eine y-Achse als Bezugsgrössen definiert werden, bezüglich derer die Drehlagen bestimmt werden. In den Beispielen wird der auf dem Drehkörper angeordnete Code lediglich aus Veranschaulichungsgründen als Inkrementalcode mit einer äquidistanten Abfolge von gleichartigen Musterelementen 6 dargestellt. Das erfindungsgemässe Verfahren ist jedoch nicht hierauf beschränkt und kann grundsätzlich für alle Typen von Inkremental- oder Absolutcodes Verwendung finden.

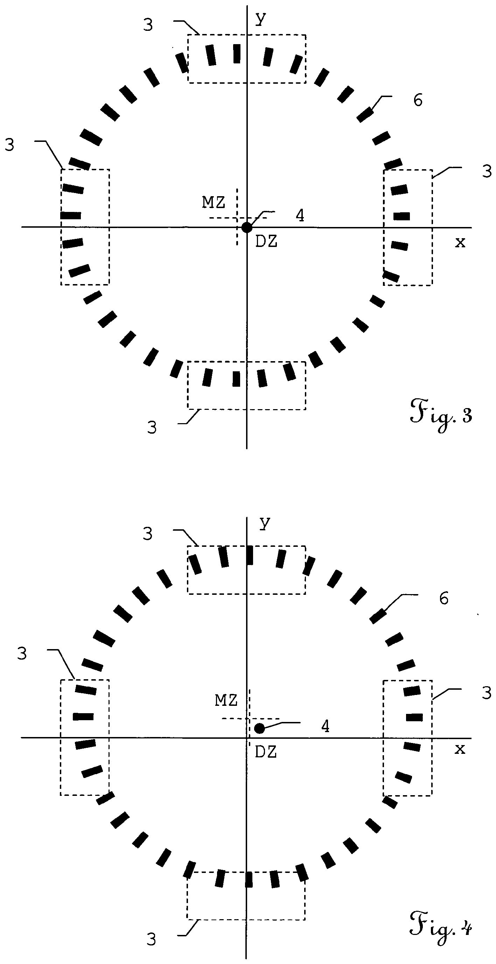

In Fig.3 wird die Auswirkung der Einflussgrösse eines Codefehlers schematisch dargestellt. In diesem Fall ist das Musterzentrum MZ als geometrischer Mittelpunkt der Musterelemente 6 bzw. des durch diese definierten Gesamtcodes nach links oben verschoben. Bei einer Rotation um die Drehachse 4, die hier weiterhin mit dem Detektorzentrum DZ zusammenfällt, vollführt das Musterzentrum eine kreisende Bewegung um das Detektorzentrum DZ. Die Exzentrizität des Musterzentrums MZ kann anhand der gegenüber Fig.2 verschobenen Positionen der Musterelemente 6 auf den Detektorelementen 3 bestimmt werden. Die Detektorelemente 3 registrieren hierbei ein in Abhängigkeit der Drehlage sinusförmig mit der Periode $2\pi$ variierendes Ausmass der Exzentrizität.

Fig.4 zeigt die schematische Darstellung der Auswirkung der Einflussgrössen eines Codefehlers und einer translatorischen Verschiebung der Drehachse. Nun fallen Musterzentrum MZ, Detektorzentrum DZ und Drehachse 4 auseinander. Durch die Rotation des Drehkörpers um die Drehachse 4 bewegt sich das Musterzentrum MZ kreisförmig um diese Drehachse 4, die wiederum eine Exzentrizität bzgl. des Detektorzentrum DZ aufweist. In diesem Fall überlagern sich zwei Einflussgrössen der Exzentrizität. Die Detektorelemente 3 der Detektoranordnung bestimmen stets die Position der Musterelemente 6 ohne direkte Auflösung der Einflussgrössen, aus denen die Gesamtexzentrizität resultiert. Durch die Überlagerung der beiden Exzentrizitätseinflüsse registrieren die Detektorelemente 3 hierbei ein gegenüber den Achsen versetztes und in Abhängigkeit der Drehlage sinusförmig mit der Periode $2\pi$ variierendes Ausmass der Exzentrizität. Durch eine Trennung der beiden Einflussgrössen bzw. Exzentrizitätsursachen kann die Lage des aktuellen Drehpunkts des Drehkörpers bezüglich des Detektorzentrums DZ als translatorische Lagerverschiebung bestimmt werden. Neben der Auswertung der winkel- bzw. drehlagenabhängigen Exzentrizitätsmessungen kann auch eine Betrachtung der Zeitabhängigkeit erfolgen, bspw. durch eine fortlaufende Analyse während des Betriebes oder eine automatische Kalibriersequenz über den vollen Winkelkreis beim Starten des Gerätes. Die hierbei gemessenen Werte können dann hinsichtlich der Veränderung der Einflussgrössen in zeitlicher Hinsicht analysiert und entsprechende Modelle oder Funktionen, z.B. für die zeitliche Veränderung der Lage des aktuellen Drehpunkts, abgeleitet werden.

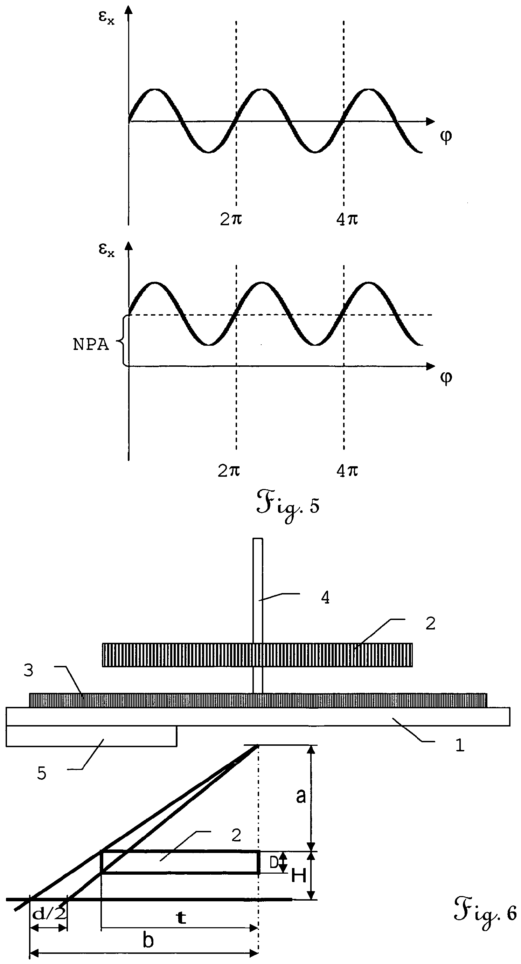

In Fig.5 wird die Separation der Einflussgrössen eines Codefehlers und einer translatorischen Verschiebung der Drehachse erläutert. Dargestellt wird die Grösse des Exzentrizitätsfehlers $\varepsilon_x$ bezüglich der x-Achse in Abhängigkeit von der Drehlage $\varphi$.

Die obere Darstellung zeigt hierbei die Veränderung für den in Fig.3 dargestellten reinen Codefehler, d.h. die Abweichung des Musterzentrums vom Drehpunkt, der seinerseits mit dem Detektorzentrum zusammenfällt. Der Exzentrizitätsfehlers $\varepsilon_x$ variiert sinusförmig um die Null-Lage, wobei aus Veranschaulichungsgründen auch die Wiederholung einer Rotation als Periode bis $4\pi$ dargestellt wird.

Die untere Darstellung zeigt hierbei die Veränderung für die in Fig.4 dargestellte Kombination der Einflüsse aus Codefehler und translatorischer Verschiebung der Drehachse, d.h. die Abweichung des Musterzentrums vom Drehpunkt, sowie dessen Abweichung vom Detektorzentrum. Der Exzentrizitätsfehlers $\varepsilon_x$ variiert sinusförmig um die um einen nichtperiodischen Anteil NPA verschobene Null-Lage, wobei aus Veranschaulichungsgründen auch hier die Wiederholung einer Rotation als Periode bis $4\pi$ dargestellt wird.

Erfolgen die Messungen mit hoher Frequenz und somit unterhalb der Zeitskala für Veränderungen der translatorischen Verschiebung, so kann die Position der Drehachse für die Zwecke der aktuellen Bestimmung als statisch betrachtet werden. Sind bei kleiner Zahl von Messungen die Drehlagen gleichverteilt bzw. die Zahl der Messungen hinreichend gross, so können die Einflüsse der sinusförmigen Veränderungen durch eine Mittelwertbildung eliminiert werden, insbesondere durch einen gleitenden Mittelwert, der durch sein Erfassungsfenster auch eine zeitliche Einschränkung der zu berücksichtigenden Werte erlaubt. Hierbei können allgemeine statistische Ansätze ergänzend oder alternativ zur Anwendung kommen, z.B. eine Gewichtung von Messungen anhand ihres Messzeitpunktes.

Der Code- bzw. Teilungsfehler als eine musterspezifische Einflussgrösse mit einer der vollen Rotation des Drehkörpers entsprechenden Periodizität kann aber auch durch andere entsprechend geeignete Verfahren separiert werden, z.B. durch eine Fourier-Zerlegung. Dies bietet sich beispielsweise bei verrauschten oder nicht über den Vollkreis gleichverteilten Messwerten an. Auch erlaubt dies eine Analyse von innerhalb des auszuwertenden Messintervalls nicht statischen Einflussgrössen, wie z.B. einer driftenden, nutierende oder präzedierenden Drehachse, deren harmonische Anteile so getrennt werden können.

Eine Ergänzung der Bestimmung von Einflussgrössen stellt die Bestimmung vertikaler Effekte dar, d.h. die Berücksichtigung der z-Achse, wie dies in Fig.6 anhand der Darstellung der geometrischen Beziehungen für Bestimmung der axialen Position des Drehkörpers 2 erläutert wird. Hierbei wird die Lage des Drehkörpers 2 oder von Musterelementen des Drehkörpers 2 in axialer Richtung anhand des Projektionsmassstabs der Musterelemente auf die Detektoranordnung bzw. die Detektorelemente 3 durch die auf dem Trägerelement 1 angeordnete Rechen- und Auswerteeinheit 5 bestimmt. Weist die Detektoranordnung wenigstens zwei Detektorelemente 3 auf, insbesondere mit einer orthogonalen Ausrichtung, so kann aus den beiden Distanzwerten für die unterschiedlichen Position eine Verkippung der Drehachse 4 abgeleitet wird.

Die geometrischen Beziehungen stellen sich dabei wie folgt dar

$$\frac{a}{t} = \frac{a+H}{b} \tag{1}$$

$$\frac{a+D}{t} = \frac{a+H}{b-d/2} \tag{2}$$

wobei

a den Abstand von Drehkörper zu einer beleuchtenden Quelle,
t den Radius des Drehkörpers,
D die Verschiebung des Drehkörpers als Fehler,
H den Abstand der Oberseite des Drehkörpers zum Detektorelement,
b die halbe Länge des Detektorelementes,
d die Auflösung des Detektorelementes

bezeichnen, mit a, t, H gegeben, b, b-d gemessen und D gesucht. Aus (1) und (2) folgt die Beziehung

$$D = \frac{a \cdot d}{2b - d} \approx a/2b \cdot d$$

$$( 3 )$$

so daß sich für ein Zahlenbeispiel mit a = 30 mm, b = 4 mm, $d_{min}$ = 0.001 mm eine Auflösung und damit Messgenauigkeit für die Verschiebung des Drehkörpers von 3.75 $\mu$m folgt.

Die Bestimmung der Distanz des Drehkörpers 2 zum Detektorelement 3 bzw. der Detektoranordnung ist hierbei auch unabhängig von den anderen Verfahrensteilen möglich, d.h. insbesondere auch ohne die Separation der verschiedenen Einflussgrössen. Damit kann dieser Ansatz auch unabhängig vom erfindungsgemässen Verfahren zum Einsatz kommen.

Es versteht sich, dass diese dargestellten Figuren nur Beispiele möglicher Ausführungsformen schematisch darstellen. In den Darstellungen wurden weitere elektronische Steuer- und Versorgungsanteile sowie Montagekomponenten lediglich aus Gründen der Anschaulichkeit nicht dargestellt.

**Patentansprüche**

1. Verfahren zur Bestimmung wenigstens einer Einflussgrösse auf die Exzentrizität in einem Winkelmesser mit

   • einem Trägerelement (1) mit einer Detektoranordnung aus wenigstens einem optischen Detektorelement (3) in der Form eines Winkelmesskopfes, vorzugsweise drei oder vier optischen Detektorelementen (3), wobei die Detektoranordnung ein Detektorzentrum (DZ) als eine ausgezeichnete Position der Detektoranordnung aufweist,
   • einem Drehkörper (2) mit einer Vielzahl um ein Musterzentrum (MZ) angeordneter Musterelemente (6), wobei der Drehkörper (2) gegenüber dem Trägerelement (1) um eine Achse (4) rotierbar angeordnet ist, und mit

   - einem Abbilden von wenigstens einem Teil der Musterelemente (6) auf die Detektoranordnung,
   - einem Auflösen der Positionen der auf der Detektoranordnung abgebildeten Musterelemente (6),
   - einem Messen der Exzentrizität des Musterzentrums (MZ) relativ zum Detektorzentrum (DZ),

   **dadurch gekennzeichnet, dass**

   • eine Vielzahl von Exzentrizitätsmessungen für unterschiedliche Drehlagen erfolgt und
   • aus der Vielzahl von Exzentrizitätsmessungen wenigstens eine Einflussgrösse der Exzentrizität separiert wird, insbesondere durch Aggregatbildung.

2. Verfahren nach Anspruch 1,
   **dadurch gekennzeichnet, dass**
   die Einflussgrössen der aktuellen Exzentrizität durch eine Fourier-Zerlegung separiert wird.

3. Verfahren nach Anspruch 1 oder 2,
   **dadurch gekennzeichnet, dass**
   eine musterspezifische Einflussgrösse mit einer der vollen Rotation des Drehkörpers (2) entsprechenden Periodizität als Teilungsfehler separiert wird.

4. Verfahren nach einem der vorangehenden Ansprüche,
   **dadurch gekennzeichnet, dass**
   ein Mittelwert aus der Vielzahl von Exzentrizitätsmessungen gebildet wird, insbesondere ein gleitender Mittelwert.

5. Verfahren nach einem der vorangehenden Ansprüche,
   **dadurch gekennzeichnet, dass**
   eine Lage des aktuellen Drehpunkts des Drehkörpers (2) bezüglich des Detektorzentrums (DZ) als translatorische Lagerverschiebung bestimmt wird.

6. Verfahren nach Anspruch 5,
   **dadurch gekennzeichnet, dass**
   die zeitliche Veränderung der Lage des aktuellen Drehpunkts bestimmt wird.

**7.** Verfahren nach einem der vorangehenden Ansprüche,
**dadurch gekennzeichnet, dass**
die Lage des Drehkörpers (2) oder die Lage von Musterelementen (6) des Drehkörpers (2) in axialer Richtung anhand des Projektionsmassstabs der Musterelemente (6) auf die Detektoranordnung bestimmt wird.

**8.** Verfahren nach Anspruch 7,
**dadurch gekennzeichnet, dass**
die Lage von Musterelementen (6) des Drehkörpers (2) in axialer Richtung auf die Detektoranordnung bestimmt wird, wobei die Detektoranordnung wenigstens zwei Detektorelemente (3) aufweist, und aus der Lage eine Verkippung der Achse (4) abgeleitet wird.

**9.** Computerprogramm-Produkt mit Programmcode, der auf einem maschinenlesbaren Träger gespeichert ist oder durch eine elektromagnetische Trägerwelle verkörpert ist, mit einem Programmcode-Segment zur Durchführung wenigstens eines der Schritte des Verfahrens nach einem der Ansprüche 1 bis 8.


**Claims**

**1.** Method for determining at least one influencing variable acting on the eccentricity in a goniometer, comprising

• a support element (1) with a detector arrangement comprising at least one optical detector element (3), embodied as a goniometer head, preferably three or four optical detector elements (3), wherein the detector arrangement displays a detector centre (DZ) as a distinguished position of the detector arrangement,
• a rotational body (2) having a multiplicity of pattern elements (6) arranged around a pattern centre (MZ), the rotational body (2) being arranged so as to be rotatable about an axis (4) relative to the support element (1), and comprising
- mapping of at least a part of the pattern elements (6) onto the detector arrangement,
- resolution of the positions of the pattern elements (6) mapped on the detector arrangement,
- measurement of the eccentricity of the pattern centre (MZ) relative to the detector centre (DZ),

**characterized in that**

• a multiplicity of eccentricity measurements is effected for different rotational positions and
• at least one influencing variable acting on the eccentricity is separated from the multiplicity of eccentricity measurements, in particular by aggregate formation.

**2.** Method according to Claim 1, **characterized in that** the influencing variables of the current eccentricity are separated by a Fourier analysis.

**3.** Method according to Claim 1 or 2, **characterized in that** a sample-specific influencing variable having a periodicity corresponding to the full rotation of the rotational body (2) is separated as a pitch error.

**4.** Method according to any of the preceding claims, **characterized in that** an average is calculated from the multiplicity of eccentricity measurements, in particular a sliding average.

**5.** Method according to any of the preceding claims, **characterized in that** the position of the current pivot point of the rotational body (2) relative to the detection centre (DZ) is determined as a translational bearing shift.

**6.** Method according to claim 5, **characterized in that** the change of the position of the current pivot point as a function of time is determined.

**7.** Method according to any of the preceding claims, **characterized in that** the position of the rotational body (2) or the position of pattern elements (6) of the rotational body (2) in the axial direction is determined on the basis of the scale of projection of the pattern elements (6) onto the detector arrangement.

**8.** Method according to Claim 7, **characterized in that** the position of pattern elements (6) of the rotational body (2) in the axial direction is determined on the detector arrangement, the detector arrangement having at least two detector elements (3), and a tilt of the axis (4) is derived from the position.

**9.** Computer program product comprising program code, which is stored on a machine-readable medium or is represented by an electromagnetic carrier wave, having a program code segment for carrying out at least one of the steps of the method according to any of Claims 1 to 8.

**Revendications**

**1.** Procédé de détermination d'au moins une grandeur d'influence sur l'excentricité dans un dispositif de mesure d'angle avec

- un élément porteur (1) doté d'un arrangement de détecteur constitué d'au moins un élément détecteur optique (3), sous forme d'une tête goniométrique, de préférence trois ou quatre éléments détecteurs optiques (3), dans lequel l'arrangement de détecteur comporte un centre de détecteur (DZ) en tant qu'une position remarquable de l'arrangement de détecteur,
- un corps tournant (2) doté d'une pluralité d'éléments de motif (6) agencés autour d'un centre de motif (MZ), dans lequel le corps tournant (2) est agencé contre l'élément porteur (1) en rotation autour d'un axe (4), et avec
- une représentation d'au moins une partie des éléments de motif (6) sur l'arrangement de détecteur,
- une résolution des positions des éléments de motif (6) représentés sur l'arrangement de détecteur,
- une mesure de l'excentricité du centre de motif (MZ) par rapport au centre de détecteur (DZ),
**caractérisé en ce que**
- une pluralité de mesures d'excentricité sont effectuées pour différentes positions de rotation et
- au moins une grandeur d'influence de l'excentricité est séparée de la pluralité de mesures d'excentricité, en particulier par calcul d'agrégations.

**2.** Procédé selon la revendication 1,
**caractérisé en ce que**
les grandeurs d'influence de l'excentricité actuelle sont séparées par une décomposition de Fourier.

**3.** Procédé selon la revendication 1 ou 2,
**caractérisé en ce que**
une grandeur d'influence spécifique au motif avec une périodicité correspondant à la rotation complète du corps tournant (2) est séparée comme erreur de pas.

**4.** Procédé selon l'une des revendications précédentes,
**caractérisé en ce que**
une moyenne est formée à partir de la pluralité de mesures d'excentricité, en particulier une moyenne mobile.

**5.** Procédé selon l'une des revendications précédentes,
**caractérisé en ce que**
une position du point tournant actuel du corps tournant par rapport au centre de détecteur est déterminée comme déplacement de position translatoire.

**6.** Procédé selon la revendication 5,
**caractérisé en ce que**
la variation temporelle de la position du point tournant actuel est déterminée.

**7.** Procédé selon l'une des revendications précédentes,
**caractérisé en ce que**
la position du corps tournant (2) ou la position des éléments de motif (6) du corps tournant (2) dans la direction axiale est déterminée à l'aide de l'échelle de projection des éléments de motif (6) sur l'arrangement de détecteur.

**8.** Procédé selon la revendication 7,
**caractérisé en ce que**
la position des éléments de motif (6) du corps tournant (2) dans la direction axiale est déterminée sur l'arrangement de détecteur, dans lequel l'arrangement de détecteur comporte au moins deux éléments de détecteur, et un basculement de l'axe (4) est dérivé de la position.

**9.** Produit-programme informatique doté de code de programmation, enregistré sur un support lisible par machine ou est incarné par une onde porteuse électromagnétique, avec un segment de code informatique permettant de réaliser au moins une des étapes du procédé selon l'une des revendications 1 à 8.

Fig. 1

Fig. 2

Fig. 3

Fig. 4

*Fig. 5*

*Fig. 6*

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CH 658514
- EP 1632754 A
- US 20010013765 A
- DE 19907326